Europäisches Patentamt

European Patent Office

Office européen des brevets

(11) Publication number: **0 334 629**
A2

## (12) EUROPEAN PATENT APPLICATION

(21) Application number: 89302832.4

(22) Date of filing: 22.03.89

(51) Int. Cl.⁴: **B 60 R 13/04**

(30) Priority: 22.03.88 GB 8806735

(43) Date of publication of application:
27.09.89 Bulletin 89/39

(84) Designated Contracting States: DE ES FR IT

(71) Applicant: SILENT CHANNEL PRODUCTS LIMITED
Ferrars Road
Huntingdon Cambridgeshire PE18 7HN (GB)

(72) Inventor: Sellens, David William Guy
Millstead, By-Pass Road
Nr. Bridgend, Mid-Glamorgan (GB)

(74) Representative: Nash, David Allan et al
Haseltine Lake & Co. 28 Southampton Buildings
Chancery Lane
London WC2A 1AT (GB)

(54) Finishing strip.

(57) There is disclosed an elongate finishing strip (20) comprising a channel-shaped portion having a base and two side walls (9A, 9B), the remote end (10A) of one of the side walls (9A) being enclosed by a decorative element (2) having an enlarged end region (11) which is partially secured in a recess (12) provided in the one side wall (9A) and opening towards the outside of the one side wall (9A) in the remote end region (10A) thereof, said decorative element (2) extending from its enlarged end region (11) around the remote end (10A) of the said one side wall (9A) and returning in abutment with the inside of the said one side wall (10A), wherein the mouth of the recess (12) is defined between opposed flexible regions (13', 14')which permit insertion of the enlarged (11) end of the decorative element (2) into the recess (12) and wherein a flexible limb (15) extends into the recess (12) towards the mouth thereof to abut the enlarged end (11) of the decorative element (2) and urge that element (2) against the relatively flexible regions (13', 14') at the mouth of the recess.

FIG. 2B

EP 0 334 629 A2

Description

# FINISHING STRIP

This invention relates to an elongate channel-shaped finishing strip including a decorative element and is more particularly, but not exclusively, concerned with a finishing strip suitable for gripping and finishing a flange of a motor vehicle.

It is usual for "top-of-the-range" motor vehicles to possess a higher level of trim than basic models in the range. One of the techniques by which motor vehicles are given a more striking appearance is by the provision of decorative elements at certain regions of the outer surface of the motor vehicle.

In one channel-shaped finishing strip currently used, a decorative element encloses the remote end of one of the side walls of the channel thereby providing a decorative edge to that side wall which, in use on a vehicle, is visually attractive. The decorative element is enlarged at one end thereof and this enlarged end is received in a recess in the outside of the side wall which the element is to enclose. To retain the decorative element in the recess, it has previously been found necessary to make the regions surrounding the recess, and which hold the enlarged end of the decorative element in place, relatively inflexible. However, this has the result that assembly of the finishing strip becomes difficult since the mouth of the recess needs to be opened manually to permit entry of the enlarged end of the decorative element. This slows down assembly. In order to reduce difficulties of assembly, the tolerances on the channel-shaped part and the decorative element must be very fine, leading to a more expensive product.

According to the present invention, there is provided an elongate finishing strip comprising a channel-shaped portion having a base and two side walls, the remote end of one of the side walls being enclosed by a decorative element having an enlarged end region which is partially secured in a recess provided in the one side wall and opening towards the outside of the one side wall in the remote end region thereof, said decorative element extending from its enlarged end region around the remote end of the said one side wall and returning in abutment with the inside of the said one side wall, wherein the mouth of the recess is defined between opposed flexible regions which permit insertion of the enlarged end of the decorative element into the recess and wherein a flexible limb extends into the recess towards the mouth thereof to abut the enlarged end of the decorative element and urge that element against the relatively flexible region at the mouth of the recess.

The provision of the flexible limb extending towards the mouth of the recess provides a balanced arrangement which enables the decorative element to be held in place on the side wall to which it is fixed, whilst the finishing strip is being assembled to a vehicle body. This balanced arrangement in which the enlarged end region is supported at three separate points, enables the regions which normally define the mouth of the recess to be increased in flexibility, thereby providing relatively easy insertion of a decorative element to enclose the said one side wall. Other advantages are that the tolerances on the channel-shaped part and the decorative element need to be less strict, and the decorative part "sits" in the extrudate at a better, or more square, position. In particular, the new strip adapts to tight corners more readily and tends to reduce buckling of the decorative element. In addition, it is found that assembly of the finishing strip is eased to such an extent that no lubrication is needed when inserting the decorative element into the recess.

For a better understanding of the present invention, and to show how the same may be carried into effect, reference will now be made, by way of example, to the accompanying drawing, in which:

Figure 1A shows a channel-shaped extrudate, not in accordance with the present invention, to which a decorative element is capable of being secured;

Figure 1B shows a channel-shaped extrudate of Figure 1A to which a decorative element has been secured;

Figure 2A shows an embodiment of a channel-shaped extrudate employed in the present invention, to which a decorative element is capable of being secured; and

Figure 2B shows a channel-shaped extrudate as shown in Figure 2A with a decorative element in place.

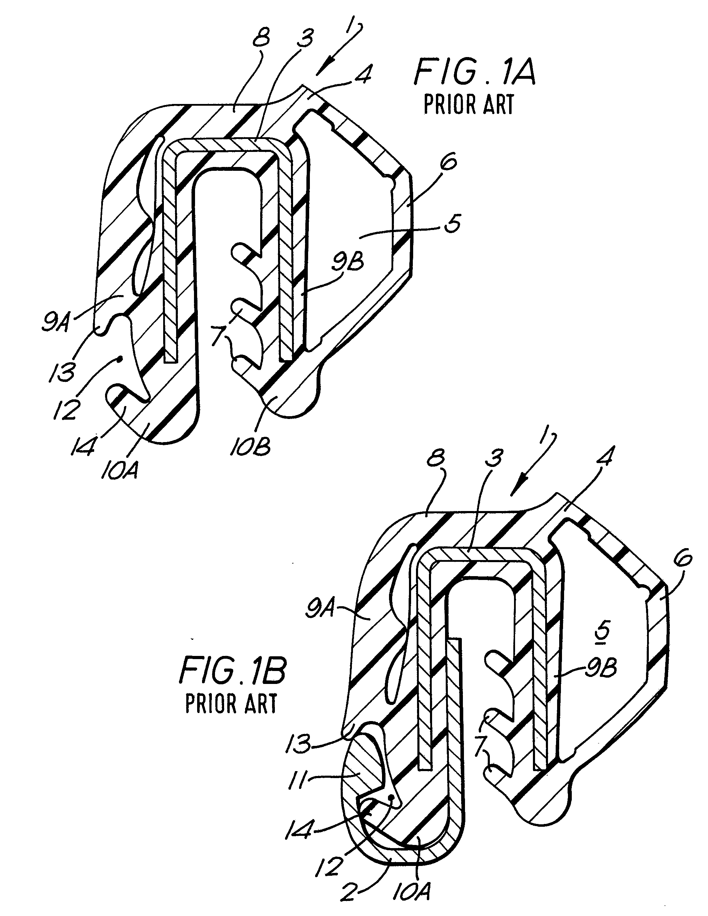

Figures 1A and 1B illustrate a prior art finishing strip arrangement 1 comprising a channel-shaped structure and a decorative element 2 (only shown in Figure 1B). The channel-shaped structure comprises a resilient U-shaped core 3 embedded in an extruded covering material 4, normally a rubber or a plastics material. The channel-shaped structure shown in Figures 1A and 1B has a number of conventional constructional features, such as a space 5 surrounded by a wall 6 providing a compressible region. The structure also has three ribs 7 which are directed towards the base of the channel and which act to secure the finishing strip 1 on a flange or the like. The channel-shaped structure has a generally channel-shaped configuration comprising a base 8 and two side walls 9A, 9B. Each side wall has a free end region 10A, 10B.

The decorative element 2 encloses the remote end region 10A of one of the side walls 9A of the structure. The decorative element 2 has an enlarged head portion 11 which is received in a recess 12 in the structure. The decorative element 2 extends from the enlarged end 11 around the remote end region 10A of the side wall 9A and returns in abutment with the inside of the side wall 9A. The mouth of the recess 12 is defined between lips 13 and 14. These lips 13, 14 must be forced apart in order to enable the enlarged head 11 to be accommodated in the recess 12. It has proven difficult, however, to design a system along the lines shown which permits easy insertion of the enlarged end 11 of the decorative element 2 into the recess 12 whilst resisting removal of the decorative element 2 from the side wall 9A.

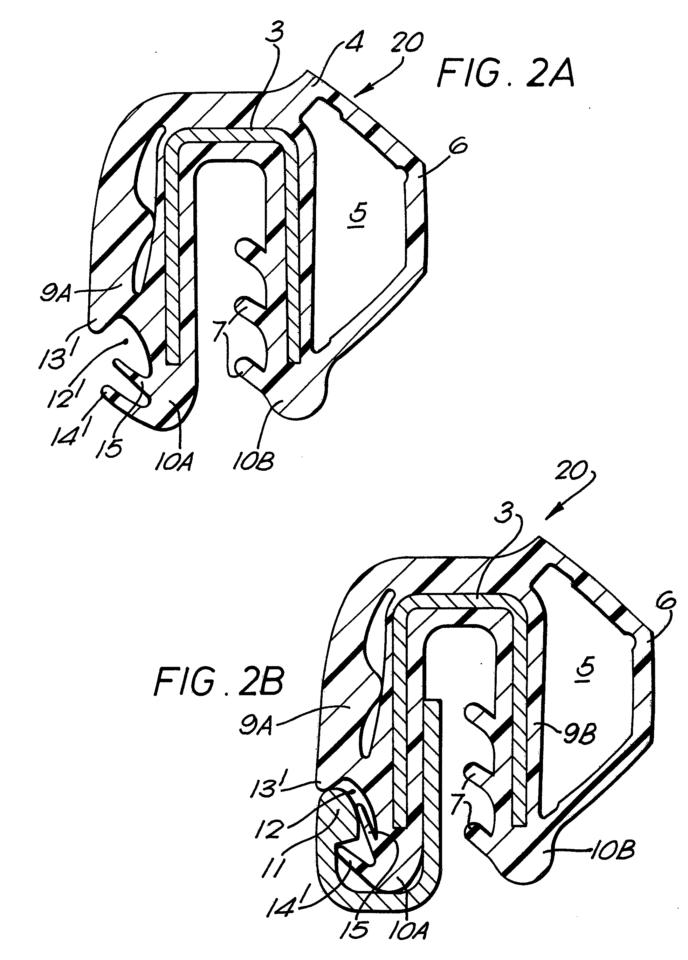

The problem with the strip structure shown in Figures 1A and 1B is solved by using the strip structure 20 shown in Figures 2A and 2B in which like numerals refer to corresponding components shown in Figures 1A and 1B. In the structure shown in Figures 2A and 2B, the remote end region 10A enclosed by the decorative element 2 has a novel arrangement. Although similar to the arrangements shown in 1A and 1B insofar as the novel arrangement includes a recess 12' having a mouth defined between two lips 13' and 14', the lips, especially the lower lip 14', defining the mouth of the recess 12' is much more flexible than the corresponding lip in the prior art arrangement. This enables relatively easy insertion of the enlarged end 11 of the decorative element 2 into the recess. However, in order to enhance resistance to removal of the decorative element 2, a further flexible limb 15 which protrudes from the base of the recess 12' is provided. The further flexible limb 15 flexes on entry of the enlarged end 11 of the decorative element 2 into the recess 12' and urges the enlarged end 11 of the decorative element 2 against the limbs 12' and 13' holding the enlarged end 11 in rigid engagement therewith. In the arrangement shown in Figures 2A and 2B there is a balanced configuration in which the enlarged end 11 of the decorative element 2 is gripped at three points. The resulting finishing strip 20 which replaces the prior art strip 1 shown in Figure 1B is much easier to assemble, requires less strict tolerances and, in situ on a flange of a motor vehicle, the decorative element 2 sits in more even, regular position along the length of the strip.

## Claims

1. An elongate finishing strip comprising a channel-shaped portion having a base and two side walls, the remote end of one of the side walls being enclosed by a decorative element having an enlarged end region which is partially secured in a recess provided in the one side wall and opening towards the outside of the one side wall in the remote end region thereof, said decorative element extending from its enlarged end region around the remote end of the said one side wall and returning in abutment with the inside of the said one side wall, wherein the mouth of the recess is defined between opposed flexible regions which permit insertion of the enlarged end of the decorative element into the recess and wherein a flexible limb extends into the recess towards the mouth thereof to abut the enlarged end of the decorative element and urge that element against the relatively flexible regions at the mouth of the recess.

2. An elongate finishing strip according to claim 1, wherein the channel-shaped portion comprises a resilient channel-shaped core embedded in an extruded covering material.

3. An elongate finishing strip according to claim 2, wherein the extruded covering material is a rubber or a plastics material.

FIG . 1A
PRIOR ART

FIG . 1B
PRIOR ART

EP 0 334 629 A2

FIG. 2A

FIG. 2B